# EUROPEAN PATENT SPECIFICATION

(11) **EP 2 227 533 B1**
(45) Date of publication and mention of the grant of the patent: **07.12.2011**
(21) Application number: 08869523.4
(22) Date of filing: 17.12.2008
(51) Int. Cl.: C11D 3/40, C09B 44/20

(54) **SHADING COMPOSITION**
SCHATTIERUNGSZUSAMMENSETZUNG
COMPOSITION DE NUANÇAGE

(30) Priority: 11.01.2008 EP 08150172
(43) Date of publication of application: 15.09.2010
(73) Proprietor: Unilever PLC, A Company Registered in England and Wales under Company no. 41424, London EC4Y 0DY (GB); Unilever N.V., 3012 AL Rotterdam (NL)
(72) Inventor: BATCHELOR, Stephen, Norman, Wirral Merseyside CH63 3JW (GB); BIRD, Jayne, Michelle, Wirral Merseyside CH63 3JW (GB); JOYCE, Susan, Barbara, Wirral Merseyside CH63 3JW (GB)
(74) Representative: Avila, David Victor
(86) International application number: PCT/EP2008/067798
(87) International publication number: WO 2009/087034

(56) References cited:
- WO-A-2007/084729
- DE-A1- 2 232 542

## Description

### FIELD OF INVENTION

The present invention relates to the delivery of dyes to fabrics.

### BACKGROUND OF THE INVENTION

Many garments yellow over multiple wash wear cycles, reducing the aesthetic value of the garment. In order to maintain the white appearance shading dyes may be used. For main wash applications these are preferably violet dyes. Typically direct violet dyes, such as direct violet 9 or 99 have been used. Direct dyes build up over multiple washes, and this can lead to a strong blue or violet colour on the garment. To make this overshading acceptable lower level of dye must be used reducing the benefit.

WO 2007/084729, to Proctor and Gamble, discloses the use of thiazolium dyes in Laundry formulations as a shading agent that does not build up over multiple washes.

WO 2007/087252, to Millican, discloses the use of thiazolium dyes in Laundry formulations as a shading agent that does not build up over multiple washes.

### SUMMARY OF THE INVENTION

We have found that thiazolium dyes substituted by alkyl acid amide give better performance in laundry applications over those disclosed in WO 2007/084729 and WO 2007/087252.

In one embodiment the present invention provides a laundry treatment composition comprising:
(i) from 2 to 70 wt% of a surfactant, and from 0.0001 to 0.1 wt% of a thiazolium dye of the following form: 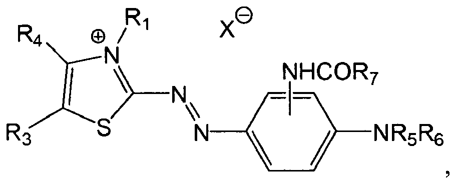 wherein R₁ is a branched or linear C1-C4 alkyl group;
   R₃ and R₄ are independently selected from H, CH₃, and C₂H₅ or R₃ and R₄ are joined to form a benzene ring;
   R₅ and R₆ are independently selected from: H, a branched or linear C1-C4 alkyl group, wherein the alkyl group chain may be substituted by OH groups, phenyl, COR₇, CH₂Ph, (C₂H₄O)ₙH wherein n is 2 to 5;
   R₇ is a branched or linear C1-C4 alkyl group; and,
   X is a negative anion.

The present invention extends to the thiazolium dyes substituted by an alkyl acid amide, in particular wherein R3 and R4 are selected from H, CH3 and C2H5.

In another embodiment of the present invention provides a domestic method of treating a textile, the method comprising the steps of:
(i) treating a textile with an aqueous solution of a thiazolium dye, the aqueous solution comprising from 1 ppb to 1 ppm of the thiazolium dye, and from 0 ppb to 1 ppm of another dye or pigment selected from: pigments, hydrophobic dyes and direct dyes; and, from 0.0 g/L to 3 g/L of a surfactant; and,
(ii) rinsing and drying the textile.

Preferably the aqueous solution contains 10 to 300 ppb of the thiazoliumdye.

### DETAILED DESCRIPTION

Synthesis of thiazolium dyes is described in WO 2007/084729 and WO 2007/087252. It is a matter of routine to vary the substiutents to in order to arrive at the thiazolium dyes used in the present invention.

Preferably R₁ is selected from: CH₃, and C₂H₅, most preferably CH₃.

Preferably R₃ and R₄ are selected from: CH₃, C₂H₅ and H. Most preferably R₃ and R₄ are H.

Preferably R₅ and R₆ are independently selected from: a branched or linear C1-C4 alkyl group, wherein the chain may be substituted by OH groups and (C₂H₄O)ₙH wherein n is 2 to 5. Most Preferably R₅ and R₆ are independently selected from: CH₃, C₂H₅, and (C₂H₄O)ₙH wherein n is 2.

Preferably R₇ is selected from: CH₃, and C₂H₅, most preferably CH₃.

X- is not essential aspect of the invention and may be varied widely. X- may be an anion such as RCOO⁻, BPh₄⁻, ClO₄⁻, BF₄⁻, PF₆⁻, RSO₃⁻, RSO₄⁻, SO₄²⁻, NO₃⁻, F⁻, Cl⁻, Br⁻, or I⁻, with R being hydrogen, optionally substituted alkyl or optionally substituted aryl. Preferably X- is selected from: CH₃SO₃⁻, CH₃CO₂⁻, BF₄⁻, Cl⁻, F⁻, Br⁻, and I⁻.

The alkyl acid amide (NHCOR₇) on the phenyl group is most preferably ortho to the azo link as found in the examples of the invention. Thiazolium dyes T1 and T6 as found in the examples of the invention are preferred dyes.

The thiazolium dye is preferably present in the formulation at level of 0.0005 to 0.005 wt%.

In granular formulation the thiazolium dye is preferably granulated with an acidic component to reduce hydrolysis on storage as discussed in WO2007/039042 (Unilever).

In granular formulation it is preferred if the thiazolium dye is present in the granules at below 0.4 wt% more preferably below 0.1 wt% to reduce spotting.

Non-ionic is preferably present in the granule containing the thiazolium dye to reduce spotting.

In a preferred embodiment of the invention, the main wash formulation contains further shading dyes selected from hydrophobic dyes, most preferably disperse violet 26, disperse violet 28, disperse violet 77, solvent violet 13 or disperse violet 27. These dyes give benefits to synthetic fibres such as elastane and polyester. The hydrophobic dyes are preferably blue or violet.

The hydrophobic dyes when present are preferably present at a level of 0.0001 to 0.1% and most preferably at a level of 0.0005 to 0.005 wt%.

In a preferred embodiment of the invention, the main wash formulation contains further shading dyes selected from direct violet dyes.

In this embodiment the thiazolium dye provides a shading in the first few washes that is visual and pleasing. The effect of the direct dye only becomes visible after multiple washes and serves to counteract the long term yellowing.

In this way, both rejuvenation and whiteness maintenance may be provided to the consumer.

### HYDROPHOBIC DYE

Hydrophobic dyes are defined as organic compounds with a maximum extinction coefficient greater than 1000 L/mol/cm in the wavelength range of 400 to 750 nm and that are uncharged in aqueous solution at a pH in the range from 7 to 11. The hydrophobic dyes are devoid of polar solubilizing groups. In particular the hydrophobic dye does not contain any sulphonic acid, carboxylic acid, or quaternary ammonium groups. The dye chromophore is preferably selected from the group comprising: azo; anthraquinone; phthalocyanine; benzodifuranes; quinophthalones; azothiophenes; azobenzothioazoles and, triphenylmethane chromophores. Most preferred are azo and anthraquinone dye chromophores.

Many examples of hydrophobic dyes are found in the classes of solvent and disperse dyes.

Shading of white garments may be done with any colour depending on consumer preference Blue and Violet are particularly preferred shades, most preferable violet, and consequently preferred dyes or mixtures of dyes are ones that give a blue or violet shade on white.

A wide range of suitable solvent and disperse dyes are available. However detailed toxicological studies have shown that a number of such dyes are possible carcinogens, for example disperse blue 1. Such dyes are not preferred. More suitable dyes may bye selected from those solvent and disperse dyes used in cosmetics. For example as listed by the European Union in directive 76/768/EEC Annex IV part 1. For example disperse violet 27 and solvent violet 13.

Preferred azo hydrophobic dyes for use in the present invention are: Disperse Violet 2, 3, 5, 6, 7, 9, 10, 12, 13, 16, 24, 25, 33, 39, 42, 43, 45, 48, 49, 50, 53, 54, 55, 58, 60, 63, 66, 69, 75, 76, 77, 82, 86, 88, 91, 92, 93, 93:1, 94, 95, 96, 97, 98, 99, 100, 102, 103, 104, 106 or 107 and Dianix® violet cc,

Preferred anthraquinone hydrophobic dyes for use in the present invention are: Solvent Violet 11, 13, 14, 15, 15, 26, 28, 29, 30, 31, 32, 33, 34, 26, 37, 38, 40, 41, 42, 45, 48, 59; Solvent Blue 11, 12, 13, 14, 15, 17, 18, 19, 20, 21, 22, 35, 36, 40, 41, 45, 59, 59:1, 63, 65, 68, 69, 78, 90; Disperse Violet 1, 4, 8, 11, 11:1, 14, 15, 17, 22, 26, 27, 28, 29, 34, 35, 36, 38, 41, 44, 46, 47, 51, 56, 57, 59, 60, 61, 62, 64, 65, 67, 68, 70, 71, 72, 78, 79, 81, 83, 84, 85, 87, 89, 105;

Other preferred (non-azo) (non-anthraquinone) hydrophobic dykes for use in the present invention are:, Solvent Violet 8, Lumogen F Blau 650, and Lumogen F Violet 570.

Solvent violet 13 is most preferred.

### PIGMENTS

Organic pigments are described in 'Industrial Organic Pigments', Wiley VCH 2004 by W.Herbst and K.Hunger. Dyes are organic chemicals that are soluble in their application medium. Pigments are inorganic or organic particles that are insoluble in their application medium.

Pigments provide further colour to the formulation and shading effects on both synthetic and cellulosic garments.

When pigments are present they are preferably present at levels of 0.0001 to 0.1%, preferably 0.0005 to 0.005 wt%. Inorganic pigments such as pigment blue 29 or pigment pigment violet 15 may be used, however organic pigments are preferred.

Preferred pigments are pigment blue 1, 1:2, 1:3, 2, 2:1, 2:2, 3, 4, 5, 7, 9, 10, 10:1, 11, 12, 13, 14, 15, 15:1, 15:2, 15:3, 15:4, 15:6, 16, 18, 19, 20, 21, 22, 23, 25, 26, 27, 28, 29, 30, 31, 32, 34, 35, 36, 56, 57, 58, 59, 60, 61, 61:1, 62, 63, 64, 65, 66, 67, 69, 71, 72, 73, 74, 75, 79, 80, 83 and pigment violet 1, 1:1, 1:2, 2, 3, 3:1, 3:3, 3:4, 5, 5:1, 7:1, 8, 9, 11, 12, 13, 14, 15, 16, 18, 19, 23, 25, 27, 28, 29, 31, 32, 35, 37, 39, 41, 42, 43, 44, 45, 47, 48, 50, 54, 55 and 56

More Preferred organic pigments are pigment violet 1, 1:1, 1:2, 2, 3, 5:1, 13, 23, 25, 27, 31, 37, 39, 42, 44, 50 and Pigment blue 1, 2, 9, 10, 14, 18, 19, 24:1, 25, 56, 60, 61, 62, 66, 75, 79 and 80.

More preferred pigments are pigment violet 3, 13, 23, 27, 37, 39, pigment blue 14, 25, 66 and 75.

The most preferred is pigment violet 23.

### DIRECT DYE

When a direct violet or direct blue dye is present it is preferably present at levels of 0.00001 to 0.001%, preferably 0.0005 to 0.0003%.

Direct violet and direct blue dyes are preferred. Preferably the dye are bis-azo or tris-azo dyes. The carcinogenic benzidene based dyes are not preferred.

Bis-azo copper containing dyes such as direct violet 66 may be used.

Most preferably the direct dye is a direct violet of the following structures: 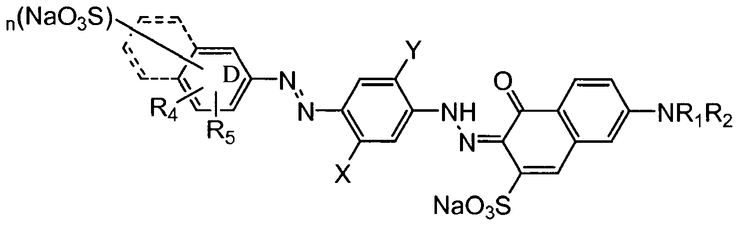 or 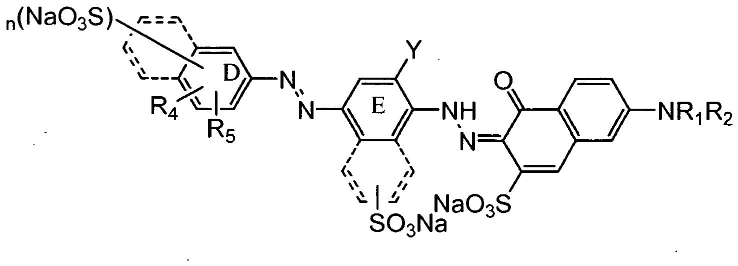 wherein:
ring D and E may be independently naphthyl or phenyl as shown;
R₁ is selected from: hydrogen and C1-C4-alkyl, preferably hydrogen;
R₂ is selected from: hydrogen, C1-C4-alkyl, substituted or unsubstituted phenyl and substituted or unsubstituted naphthyl, preferably phenyl;
R₃ and R₄ are independently selected from: hydrogen and C₁-C4-alkyl, preferably hydrogen or methyl;
X and Y are independently selected from: hydrogen, C1-C4-alkyl and C1-C4-alkoxy; preferably the dye has X= methyl; and, Y = methoxy and n is 0, 1 or 2, preferably 1 or 2.

Preferred dyes are direct violet 7, direct violet 9, direct violet 11, direct violet 26, direct violet 31, direct violet 35, direct violet 40, direct violet 41, direct violet 51, and direct violet 99.

### SURFACTANT

The composition comprises between 2 to 70 wt % of a surfactant, most preferably 10 to 30 wt %. In general, the nonionic and anionic surfactants of the surfactant system may be chosen from the surfactants described "Surface Active Agents" Vol. 1, by Schwartz & Perry, Interscience 1949, Vol. 2 by Schwartz, Perry & Berch, Interscience 1958, in the current edition of "McCutcheon's Emulsifiers and Detergents" published by Manufacturing Confectioners Company or in "Tenside-Taschenbuch", H. Stache, 2nd Edn., Carl Hauser Verlag, 1981. Preferably the surfactants used are saturated.

Suitable nonionic detergent compounds which may be used include, in particular, the reaction products of compounds having a hydrophobic group and a reactive hydrogen atom, for example, aliphatic alcohols, acids, amides or alkyl phenols with alkylene oxides, especially ethylene oxide either alone or with propylene oxide. Specific nonionic detergent compounds are C₆ to C₂₂ alkyl phenol-ethylene oxide condensates, generally 5 to 25 EO, i.e. 5 to 25 units of ethylene oxide per molecule, and the condensation products of aliphatic C₆ to C₁₈ primary or secondary linear or branched alcohols with ethylene oxide, generally 5 to 40 EO. Suitable anionic detergent compounds which may be used are usually water-soluble alkali metal salts of organic sulphates and sulphonates having alkyl radicals containing from about 8 to about 22 carbon atoms, the term alkyl being used to include the alkyl portion of higher acyl radicals. Examples of suitable synthetic anionic detergent compounds are sodium and potassium alkyl sulphates, especially those obtained by sulphating higher C₈ to C₁₈ alcohols, produced for example from tallow or coconut oil, sodium and potassium alkyl C₉ to C₂₀ benzene sulphonates, particularly sodium linear secondary alkyl C₁₀ to C₁₅ benzene sulphonates; and sodium alkyl glyceryl ether sulphates, especially those ethers of the higher alcohols derived from tallow or coconut oil and synthetic alcohols derived from petroleum. The preferred anionic detergent compounds are sodium C₁₁ to C₁₅ alkyl benzene sulphonates and sodium C₁₂ to C₁₈ alkyl sulphates. Also applicable are surfactants such as those described in EP-A-328 177 (Unilever), which show resistance to salting-out, the alkyl polyglycoside surfactants described in EP-A-070 074, and alkyl monoglycosides. Preferred surfactant systems are mixtures of anionic with nonionic detergent active materials, in particular the groups and examples of anionic and nonionic surfactants pointed out in EP-A-346 995 (Unilever). Especially preferred is surfactant system that is a mixture of an alkali metal salt of a C₁₆ to C₁₈ primary alcohol sulphate together with a C₁₂ to C₁₅ primary alcohol 3 to 7 EO ethoxylate.

The nonionic detergent is preferably present in amounts greater than 10%, e.g. 25 to 90 wt % of the surfactant system. Anionic surfactants can be present for example in amounts in the range from about 5% to about 40 wt % of the surfactant system.

In another aspect which is also preferred the surfactant may be a cationic such that the formulation is a fabric conditioner.

### CATIONIC COMPOUND

When the present invention is used as a fabric conditioner it needs to contain a cationic compound.

Most preferred are quaternary ammonium compounds.

It is advantageous if the quaternary ammonium compound is a quaternary ammonium compound having at least one C₁₂ to C₂₂ alkyl chain.

It is preferred if the quaternary ammonium compound has the following formula: 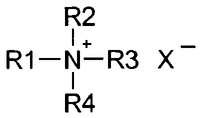 in which R¹ is a C₁₂ to C₂₂ alkyl or alkenyl chain; R², R³ and R⁴ are independently selected from C₁ to C₄ alkyl chains and X⁻ is a compatible anion. A preferred compound of this type is the quaternary ammonium compound cetyl trimethyl quaternary ammonium bromide.

A second class of materials for use with the present invention are the quaternary ammonium of the above structure in which R¹ and R² are independently selected from C₁₂ to C₂₂ alkyl or alkenyl chain; R³ and R⁴ are independently selected from C₁ to C₄ alkyl chains and X⁻ is a compatible anion.

A detergent composition according to claim 1 in which the ratio of (ii) cationic material to (iv) anionic surfactant is at least 2:1.

Other suitable quaternary ammonium compounds are disclosed in EP 0 239 910 (Proctor and Gamble).

It is preferred if the ratio of cationic to nonionic surfactant is from 1:100 to 50:50, more preferably 1:50 to 20:50.

The cationic compound may be present from 1.5 wt % to 50 wt % of the total weight of the composition. Preferably the cationic compound may be present from 2 wt % to 25 wt %, a more preferred composition range is from 5 wt % to 20 wt %.

The softening material is preferably present in an amount of from 2 to 60% by weight of the total composition, more preferably from 2 to 40%, most preferably from 3 to 30% by weight.

The composition optionally comprises a silicone.

### Builders or Complexing agents:

Builder materials may be selected from 1) calcium sequestrant materials, 2) precipitating materials, 3) calcium ion-exchange materials and 4) mixtures thereof.

Examples of calcium sequestrant builder materials include alkali metal polyphosphates, such as sodium tripolyphosphate and organic sequestrants, such as ethylene diamine tetraacetic acid.

Examples of precipitating builder materials include sodium orthophosphate and sodium carbonate.

Examples of calcium ion-exchange builder materials include the various types of water-insoluble crystalline or amorphous aluminosilicates, of which zeolites are the best known representatives, e.g. zeolite A, zeolite B (also known as zeolite P), zeolite C, zeolite X, zeolite Y and also the zeolite P-type as described in EP-A-0,384,070.

The composition may also contain 0-65 % of a builder or complexing agent such as ethylenediaminetetraacetic acid, diethylenetriamine-pentaacetic acid, alkyl- or alkenylsuccinic acid, nitrilotriacetic acid or the other builders mentioned below. Many builders are also bleach-stabilising agents by virtue of their ability to complex metal ions.

Zeolite and carbonate (carbonate (including bicarbonate and sesquicarbonate) are preferred builders.

The composition may contain as builder a crystalline aluminosilicate, preferably an alkali metal aluminosilicate, more preferably a sodium aluminosilicate. This is typically present at a level of less than 15%w. Aluminosilicates are materials having the general formula:

0.8-1.5 M₂O. Al₂O₃. 0.8-6 SiO₂

where M is a monovalent cation, preferably sodium. These materials contain some bound water and are required to have a calcium ion exchange capacity of at least 50 mg CaO/g.

The preferred sodium aluminosilicates contain 1.5-3.5 SiO₂ units in the formula above. They can be prepared readily by reaction between sodium silicate and sodium aluminate, as amply described in the literature. The ratio of surfactants to alumuminosilicate (where present) is preferably greater than 5:2, more preferably greater than 3:1.

Alternatively, or additionally to the aluminosilicate builders, phosphate builders may be used. In this art the term 'phosphate' embraces diphosphate, triphosphate, and phosphonate species. Other forms of builder include silicates, such as soluble silicates, metasilicates, layered silicates (e.g. SKS-6 from Hoechst).

Preferably the laundry detergent formulation is a non-phosphate built laundry detergent formulation, i.e., contains less than 1 wt% of phosphate.

### FLUORESCENT AGENT

The composition preferably comprises a fluorescent agent (optical brightener). Fluorescent agents are well known and many such fluorescent agents are available commercially. Usually, these fluorescent agents are supplied and used in the form of their alkali metal salts, for example, the sodium salts. The total amount of the fluorescent agent or agents used in the composition is generally from 0.005 to 2 wt %, more preferably 0.01 to 0.1 wt %. Preferred classes of fluorescer are: Di-styryl biphenyl compounds, e.g. Tinopal (Trade Mark) CBS-X, Di-amine stilbene di-sulphonic acid compounds, e.g. Tinopal DMS pure Xtra and Blankophor (Trade Mark) HRH, and Pyrazoline compounds, e.g. Blankophor SN. Preferred fluorescers are: sodium 2 (4-styryl-3-sulfophenyl)-2H-napthol[1,2-d]triazole, disodium 4,4'-bis{[(4-anilino-6-(N methyl-N-2 hydroxyethyl) amino 1,3,5-triazin-2-yl)]amino}stilbene-2-2' disulfonate, disodium 4,4'-bis{[(4-anilino-6-morpholino-1,3,5-triazin-2-yl)]amino} stilbene-2-2' disulfonate, and disodium 4,4'-bis(2-sulfostyryl)biphenyl.

### PERFUME

Preferably the composition comprises a perfume. The perfume is preferably in the range from 0.001 to 3 wt %, most preferably 0.1 to 1 wt %. Many suitable examples of perfumes are provided in the CTFA (Cosmetic, Toiletry and Fragrance Association) 1992 International Buyers Guide, published by CFTA Publications and OPD 1993 Chemicals Buyers Directory 80th Annual Edition, published by Schnell Publishing Co.

It is commonplace for a plurality of perfume components to be present in a formulation. In the compositions of the present invention it is envisaged that there will be four or more, preferably five or more, more preferably six or more or even seven or more different perfume components.

In perfume mixtures preferably 15 to 25 wt% are top notes. Top notes are defined by Poucher (Journal of the Society of Cosmetic Chemists 6(2):80 [1955]). Preferred top-notes are selected from citrus oils, linalool, linalyl acetate, lavender, dihydromyrcenol, rose oxide and cis-3-hexanol.

Perfume and top note may be used to cue the whiteness benefit of the invention.

It is preferred that the laundry treatment composition does not contain a peroxygen bleach, e.g., sodium percarbonate, sodium perborate, and peracid.

### Polymers

The composition may comprise one or more polymers. Examples are carboxymethylcellulose, poly (ethylene glycol), poly(vinyl alcohol), polycarboxylates such as polyacrylates, maleic/acrylic acid copolymers and lauryl methacrylate/acrylic acid copolymers.

Polymers present to prevent dye deposition, for example poly(vinylpyrrolidone), poly(vinylpyridine-N-oxide), and poly(vinylimidazole), are preferably absent from the formulation.

### EXPERIMENTAL

### Examples

The following thiazolium dyes were synthesised and used to exemplify the advantages of the invention:

| CODE | STRUCTURE |
|---|---|
| T1 | 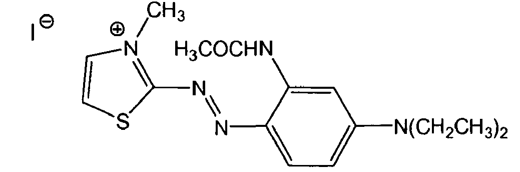 |
| T2 Comparative | 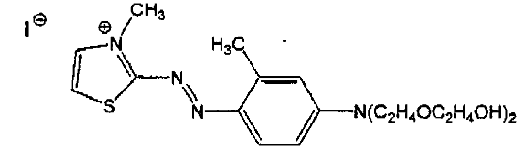 |
| T4 Comparative | 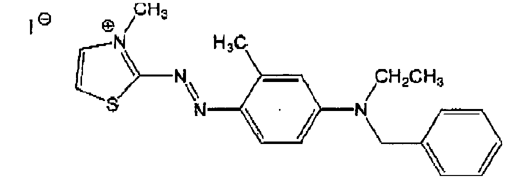 |
| T5 Comparative | 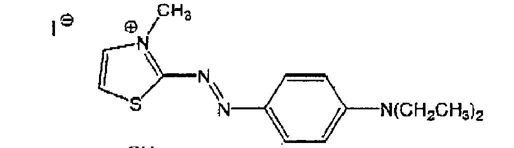 |
| T6 | 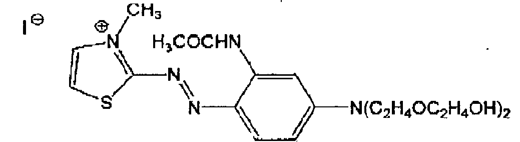 |
| T7 | 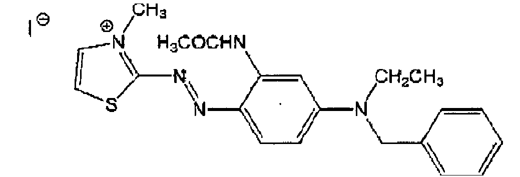 |
| T8 Comparative | 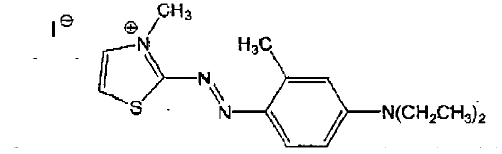 |

### Example 1

The synthesised thiazolium dyes were tested for shading benefit by separately washing cotton cloth at room temperature, in 2.0 g/L of a base washing powder which contained: 18% NaLAS, 73% salts (silicate, sodium tri-polyphosphate, sulphate, carbonate), 3% minors, fluorescer and enzymes, remainder impurities and water. A liquor to cloth of with a 30:1 was used, the washes lasted for 30 mins, and were conducted with and without the addition of 200 part per billion of the shading dye. Following the wash, the cloths were rinsed then dried. The colour of the cloth was then assessed using a reflectometer (UV excluded for all measurements) and expressed as the ΔE value relative to cloth washed without dye. The colour of the cloth was expressed in CIELAB colour space as the hue angle.

The dyes tested and results are given in the table below for cotton.

| Dye | Hue angle | ΔE |
|---|---|---|
| **T1** | **289** | **9.1** |
| T5 | 274 | 6.5 |
| T8 | 271 | 4.0 |
| **T6** | **280** | **7.7** |
| T2 | 264 | 4.6 |
| **T7** | **279** | **7.3** |
| T4 | 264 | 2.8 |

As can be seen from the results the dyes with the NHCOCH₃ substitution (T1, T6, T7) give more colour to the cloth, as indicated by higher ΔE values. They also give a true violet shade to the cloth with hue angles of 279 to 289.

Optimum shading effects are obtained with hue angles of 275-300. The commonly used shading dye direct violet 9 gives a hue angle of 288 in comparable tests.

### Example 2

### Exemplary Granular Laundry Formulations A,B,C,D

| **Formulation** | **A** | **B** | **C** | **D** |
|---|---|---|---|---|
| NaLAS | 15 | 20 | 10 | 14 |
| NI(7EO) | - | - | - | 10 |
| Na tripolyphosphate | - | 15 | - | - |
| Soap | - | - | - | 2 |
| Zeolite A24 | 7 | - | - | 17 |
| Sodium silicate | 5 | 4 | 5 | 1 |
| Sodium carbonate | 25 | 20 | 30 | 20 |
| Sodium sulphate | 40 | 33 | 40 | 22 |
| Carboxymethylcellulose | 0.2 | 0.3 | - | 0.5 |
| Sodium chloride | - | - | - | 5 |
| Lipase | 0.005 | 0.01 | - | 0.005 |
| Protease | 0.005 | 0.01 | - | 0.005 |
| Amylase | 0.001 | 0.003 | - | - |
| Cellulase | - | 0.003 | - | - |
| Fluorescer | 0.1 | 0.15 | 0.05 | 0.3 |
| Direct Violet 9 | 0.0002 | 0.00015 | - | 0.0001 |
| Solvent Violet 13 | - | 0.002 | - | 0.001 |
| Thiazolium dye T1 | 0.002 | 0.0005 | 0.002 | 0.001 |
| Sulfonated Zn Pthalocyanine photobleach | 0.002 | 0.004 | - | - |
| Water/impurities/minors | remainder | remainder | remainder | remainder |

Enzyme levels are given as percent pure enzyme. Levels of direct violet 9, solvent violet 13 and Sulfonated Zn Phthalocyanine photobleach are given as pure dye. NI (7EO) refers to R-(OCH₂CH₂)ₙOH, where R is an alkyl chain of C12 to C15, and n is 7.

The formulations are prepared by adding direct violet 9, acid violet 7 and the Sulfonated Zn Phthalocyanine photobleach into the slurry which is then spray dried. Alternatively, the dyes and photobleach may be added via post-dosed MgSO₄ granules.

The solvent violet 13 was dissolved in non-ionic surfactant (7EO) and granulated onto bentonite clay, to give a granule containing 0.2wt% dye. This was post-dosed to the formulation.

The thiazolium dye was incorporated in two ways, by cogranulation with Solvent violet 13 with an acidic binder (Sokalan CP13), and by mixing with a 30EO non-ionic then granulating with sodium sulphate and an acidic binder.

### Example 3

The following exemplary liquid laundry formulation was created.

| **Formulation** | **A** | **B** | **C** | **D** |
|---|---|---|---|---|
| NaLAS | 14 | 10 | 15 | 21 |
| NI (7EO) | 10 | 5 | 21 | 15 |
| SLES (3EO) | 7 | 10 | 7 | - |
| Soap | 2 | 4 | 1 | 0 |
| Citric acid | 1 | 1 | - | 1 |
| Glycerol | 0 | 1 | 5 | 0 |
| Propylene glycol | 5 | 3 | 0 | 4 |
| Sodium chloride | 1 | - | - | - |
| Amine ethoxylated polymers | 0.5 | 1 | - | - |
| Triethanol amine | 0 | 0.5 | 3 | 1 |
| Perfume | 0.2 | 0.1 | 0.3 | 0.4 |
| Fluorescer | 0.05 | 0.1 | 0.15 | 0.2 |
| Protease | 0.005 | 0.01 | - | 0.005 |
| Amylase | 0.001 | 0.003 | - | - |
| Lipase | - | 0.003 | - | - |
| Fluorescer | 0.1 | 0.15 | 0.05 | 0.3 |
| Thiazolium dye T1 | 0.002 | 0.003 | 0.0005 | - |
| Thiazolium dye T6 | 0.001 | - | - | 0.001 |
| Solvent Violet 13 | - | 0.002 | 0 | 0.001 |
| Water/impurities/minors | remainder | remainder | remainder | remainder |

Enzyme levels are given as percent pure enzyme. Levels of direct violet 9, direct violet 99, solvent violet 13 and Sulfonated Zn Pthalocyanine photobleach are given as pure dye. NI (7EO) refers to R-(OCH₂CH₂)ₙOH, where R is an alkyl chain of C12 to C15, and n is 7. NaLAS is linear alkyl benzene sulphonate (LAS) and (SLES(3EO)) is C₁₂-C₁₆ alkyl polyethoxylate (3.0) sulphate.

A rinse conditioner formulation, for use in the rinse stage of the wash was also created. It contained 13.7wt% N,N-di(tallowoyloxyethyl)-N,N-dimethylammonium chloride, 1.5wt% perfume 0.004wt% thiazolium dyes T6, remainder minors and water.

### Synthesis of the thiazolium dyes

### Overview

The Thiazolium dyes were synthesised according to the following scheme.

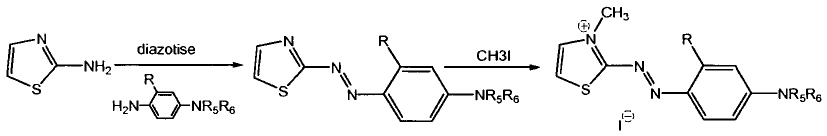

The dyes were prepared in two stages. In the first stage 2-aminothiazole was diazotised and the diazonium salt was coupled with the corresponding amine. The resulting disperse dyes were treated with methyl iodide to form the thiazolium dye with iodide as the counter ion.

The identity of the synthesised dyes were confirmed using mass spectroscopy. The dyes were all of high purity with no detectable impurities, observed by thin layer or by paper chromatography.

### Synthesis of the coupling components

Three of the coupling components could not be sourced commercially and were synthesised as follows.

### N,N-Bis(2-hydroxyethoxyethyl) m.-toluidine

m.-Toluidine (5.35g., 0.05m), 2-(2-chloroethoxy-)ethanol (18.6g., 0.015m), potassium iodide (1g) and soda ash (10g., 0.1m) were stirred at 100°C for 10 hr. On cooling the reaction mixture was added to water (100ml). The resulting solution was extracted with ether (3 x 70ml), the combined ethereal extracts were dried and solvent removed to leave a pale brown oil, 6.6g., 46%. Salt (20g.) was added to the aqueous residue and the extraction procedure repeated to yield a further 7.5g. (51%) of pale brown oil.
Total yield 14.1g., 97%.

### N,N-Bis(2-hydroxyethoxyethyl) m.-aminoacetanilide

A similar procedure was employed for the preparation of this intermediate but using 3-aminoacetanilide (7.5g., 0.01m) in place of m.-toluidine. After 3 hours all of the starting m.-aminoacetanilide had been consumed. The reaction mixture was drowned out into water (100ml). After standing (2 hours) two separate layers had formed. The organic layer was washed with ether, dissolved in methylene chloride and filtered to remove any insoluble material. The filtrate was evaporated dto dryness to leave a pale brown oil, which was essentially homogeneous by tlc, and which was used direct without any further purification.

### N-Ethyl-N-benzyl m.-aminoacetanilide

This material was prepared in two stages. In the first m.-aminoacetanilide was reacted with benzyl chloride which was converted to the desired material by ethylating with ethyl bromide.

### (a) N-Benzyl m.-aminoacetanilide

3-Aminoacetanilide (15g., 0.1m) and benzyl chloride (12.7g., 0.1m) were stirred in dimethyl formamide (12ml), for 12 min. at 60-65°C then drowned out into water (350ml.). The resulting oil layer was collected and stirred with fresh water (ca.250ml) and some methylated spirits (20ml). After several hours a sticky grey solid was formed (14g, 58%), which smelled of benzyl chloride. This was crystallised from toluene.
Yield 9.3g, 39%. Mp 128-130°C (lit. 129-130°C)

### (b) N-Ethyl-N-benzyl m.-aminoacetanilide

N-Benzyl m.-aminoacetanilide (7.2g., 0.03m), ethyl bromide (6.54g., 0.06m) and triethyl phosphate (16g., 0.088m) were stirred under reflux for 5 hr. (bath temperature 100°C). On cooling the mixture was added, with stirring, to water (ca.100 ml) and the mixture neutralised with 2N sodium carbonate. The product was extracted with methylene chloride (3 x 100ml), the combined organic extracts were dried (MgSO₄) and solvent removed to leave a pale brown syrup (9.2g), which was homogeneous by tlc. The bulk of this syrup (5.6g,) was used direct. The remainder (3.6g.) was tritrated with hexane until it solidified, but was not further purified (2.75g., mp 94-97°C).

### Synthesis of the dyes

### Example: Synthesis of dye T5

### (1) Preparation of disperse dye, 2(4-[N,N-diethylamino-]phenylazo-)thiazole.

Sodium nitrite (1.38g., 0.02m) was stirred in a 50:50 mixture of acetic acid and propionic acid (20ml) for 18 hr. Nitrosyl sulphuric acid (6.43.g.) was added and the mixture was stirred at <5°C for 30 min. The resulting diazonium salt was added, with stirring, to ice/water (ca. 70ml) containing 0.1g. of sulphamic acid, followed by a solution of diethylaniline (3g., 0.02m) in acetone (20ml). After 30 min. the mixture was allowed to warm to room temperature and 2N sodium hydroxide solution was added until basic to Congo Red. After stirring overnight solid was collected and crystallised from ethanol. Yield 3.2g., 61%; mp 169-171°C.

### (2) Quaternisation of disperse dye to form N-methyl-2(4-[N,N-diethylamino-]phenylazo-)thiazolium iodide.

2(4-[N,N-Diethylamino-]phenylazo-)thiazole (3.2g., 0.0123m) prepared above, was dissolved in methylene chloride (20ml). Iodomethane (13.68g., 0.096m) was added and the mixture was heated under reflux. On cooling the precipitated solid was collected, washed with ether until free from starting disperse dye, and dried.
Yield 4.7g., 94%. mp 173 - 175°C (decomp.)

### Example: Synthesis of dye T1

### (1) Preparation of disperse dye, 2(2-acetylamino-4-[N,N-diethylamino-]phenylazo-)thiazole.

2-Aminothiazole (2.0g., 0.02m) was diazotised and coupled onto N,N-diethyl m.-aminoacetanilide (4.12g. 0.02m) by the method described above for dye T5. The crude product was crystallised from aqueous ethanol.
Yield 5.2g., 80%, mp <90°C.

### (2) Quaternisation of disperse dye to form 2(2-acetylamino-4-[N,N-diethylamino-]phenylazo-)thiazolium iodide.

The above disperse dye (4.9g., 0.0154m) was quaternised with methyl iodide (8ml., 18.4g., 0.128m) by the method described above for dye T5.
Yield 5.7g., 81%. mp 213-215°C (decomp.)

### Example: Synthesis of dye T6

### (1) Preparation of disperse dye, 2(2-acetylamino-4-[ N,N-bis{β-hydroxyethoxyethyl-}amino-]phenylazo-)thiazole.

2-Aminothiazole (2.0g., 0.02m) was diazotised and the resulting diazonium salt was coupled onto N,N-bis(β-hydroxyethoxyethyl-) m.-aminoacetanlide (7g., ca 0.2m) as discussed above. At the end of the coupling the pH was raised to 10 with 12N sodium hydroxide: the tarry precipitate was collected, dried and used direct without further purification.
Yield 8.7g., 99%

### (2) Quaternisation of disperse dye to form N-Methyl-2(2-acetylamino-4-[N,N-bis{β-hydroxyethoxyethyl-}amino-] phenylazo-) thiazolium iodide.

The above disperse dye (8.5g., 0.0194m @ 100%e.a.) was quarternised by refluxing it with methyl iodide (22.8g., 0.16m) in methylene chloride for 8 hours. On cooling, solid was collected: this was washed with a 50:50 mixture of methylene chloride: diethyl ether until free from the starting red disperse dye.
Yield 8.3g., 73%. mp 139-142°C.

Other dyes were prepared in an analogous manner.

## Claims

1. A laundry treatment composition comprising:
(i) from 2 to 70 wt% of a surfactant, and (ii) from 0.0001 to 0.1 wt% of a thiazolium dye of the following form: 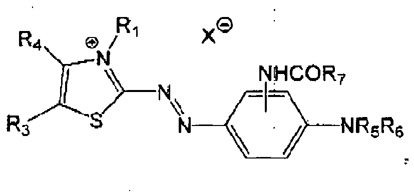 wherein R₁ is a branched or linear C1-C4 alkyl group;
R₃ and R₄ are independently selected from H, CH₃, and C₂H₅ or R₃ and R₄ are joined to form a benzene ring;
R₅ and R₆ are independently selected from: H, a branched or linear C1-C4 alkyl croup, wherein the alkyl group chain may be substituted by OH groups, phenyl, COR₇, CH₂Ph, (C₂H₄O)ₙH wherein n is 2 to 5;
R₇ is a branched or linear C1-C4 alkyl croup; and,
X is a negative anion.

2. A laundry treatment composition according to claim 1, wherein R₁ is selected from: CH₃, and C₂H₅.

3. A laundry treatment composition according to claim 2, wherein R₁ is CH₃.

4. A laundry treatment composition according to any preceding claims, wherein R₃ and R₄ are H.

5. A laundry treatment composition according to any preceding claim, wherein R₅ and R₆ are independently selected from: a branched or linear C1-C4 alkyle group, wherein the chain may be substituted by OH groups and (C₂H₄O)ₙH wherein n is 2 to 5.

6. A laundry treatment composition according to any preceding claim, wherein R₅ and R₆ are independently selected from: CH₃, C₂H₅, and (C₂H₄O)ₙH wherein n is 2.

7. A laundry treatment composition according to any preceding claim, wherein R₇ is selected from: CH₃, and C₂H₅.

8. A laundry treatment composition according to any preceding claim, wherein X is selected from: iodo, chloro, bromo, methosulfate, tetrafluoroborate, and acetate anions.

9. A laundry treatment composition according to claim 1, wherein X is selected from: iodo, chloro or bromo.

10. A laundry treatment composition according to claim 1, wherein the alkyl acid amide is ortho to the azo link in the thiazolium dye.

11. A laundry treatment composition according to claim 1, wherein the thiazolium dye is selected from: 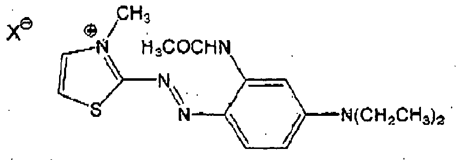 and,

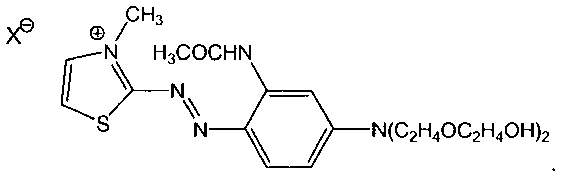

12. A domestic method of treating a textile, the method comprising the steps of:
(i) treating a textile with an aqueous solution of a thiazolium dye as defined in any one of claims 1 to 11, the aqueous solution comprising from 1 ppb to 1 ppm of the thiazolium dye, and from 0 ppb to 1 ppm of another dye or pigment selected from: pigments, hydrophobic dyes and direct dyes; and, from 0.0 g/L to 3 g/L of a surfactant; and,
(ii) rinsing and drying the textile.

13. A thiazolium dye as defined in any one of claims 1 to 11, wherein R3 and R4 are selected from H, CH3 and C2H5.

14. A thiazolium dye as defined in claims 13, wherein R3 and R4 are selected from H.

## Patentansprüche

1. Wäschebehandlungszusammensetzung, umfassend:
(i) 2 bis 70 Gew.-% eines Tensids und (ii) 0,0001 bis 0,1 Gew.-% eines Thiazolium-Farbstoffs der folgenden Formel: 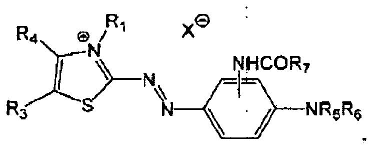 worin R₁ eine verzweigte oder lineare C1-C4-Alkyl-Gruppe ist;
R₃ und R₄ unabhängig aus H, CH₃ und C₂H₅ ausgewählt sind oder
R₃ und R₄ unter Bildung eines Benzolrings verknüpft sind;
R₅ und R₆ unabhängig aus H, einer verzweigten oder linearen C₁-C₄-Alkyl-Gruppe, wobei die Alkyl-Gruppenkette durch OH-Gruppen substituiert sein kann, Phenyl, COR₇, CH₂Ph, (C₂H₄O)ₙH, worin n 2 bis 5 ist, ausgewählt sind;
R₇ eine verzweigte oder lineare C₁-C₄-Alkyl-Gruppe ist und
X ein negatives Anion ist.

2. Wäschebehandlungszusammensetzung gemäß Anspruch 1, wobei R₁ aus CH₃ und C₅H₅ ausgewählt ist.

3. Wäschebehandlungszusammensetzung gemäß Anspruch 2, wobei R₁ CH₃ ist.

4. Wäschebehandlungszusammensetzung gemäß einem der vorangehenden Ansprüche, wobei R₃ und R₄ H sind.

5. Wäschebehandlungszusammensetzung gemäß einem vorangehenden Anspruch, wobei R₅ und R₆ unabhängig ausgewählt sind aus: einer verzweigten oder linearen C₁-C₄-AlkylGruppe, wobei die Kette mit OH-Gruppen substituiert sein kann, und (C₂H₄O)ₘH, worin n 2 bis 5 ist.

6. Wäschebehandlungszusammensetzung gemäß einem vorangehenden Anspruch, wobei R₅ und R₆ unabhängig ausgewählt sind aus: CH₃, C₂H₅ und (C₂H₄O)ₙH, worin n 2 ist.

7. Wäschebehandlungszusammensetzung gemäß einem vorangehenden Anspruch, wobei R₇ aus CH₃ und C₂H₅ ausgewählt ist.

8. Wäschebehandlungszusammensetzung gemäß einem vorangehenden Anspruch, wobei X ausgewählt ist aus Iod-, Chlor-, Brom-, Methosulfat-, Tetrafluorborat- und Acetat-Anionen.

9. Wäschebehandlungszusammensetzung gemäß Anspruch 1, wobei X aus Iod, Chlor oder Brom ausgewählt ist.

10. Wäschebehandlungszusammensetzung gemäß Anspruch 1, wobei das Alkylsäureamid ortho zu der Azo-Verknüpfung im Thiazolium-Farbstoff ist.

11. Wäschebehandlungszusammensetzung gemäß Anspruch 1, wobei der Thiazolium-Farbstoff aus 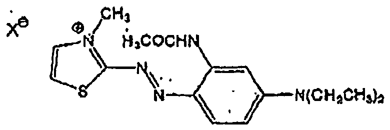 und 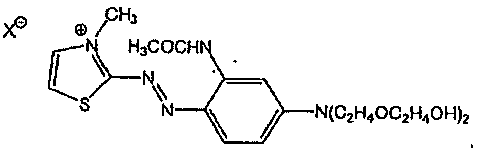 ausgewählt ist.

12. Haushaltsverfahren zur Behandlung einer Textilie, wobei das Verfahren die Schritte:
(i) Behandeln einer Textilie mit einer wässrigen Lösung eines Thiazolium-Farbstoffs, wie er in einem der Ansprüche 1 bis 11 definiert ist, wobei die wässrige Lösung 1 ppb bis 1 ppm des Thiazolium-Farbstoffs und 0 ppb bis 1 ppm eines anderen Farbstoffs oder Pigments, ausgewählt aus Pigmenten, hydrophoben Farbstoffen und Direktfarbstoffen, und 0,0 g/l bis 3 g/l eines Tensids umfasst, und
(ii) Spülen und Trocknen der Textilie
umfasst.

13. Thiazolium-Farbstoff, wie er in einem der Ansprüche 1 bis 11 definiert ist, wobei R₃ und R₄ aus H, CH₃ und C₂H₅ ausgewählt sind.

14. Thiazolium-Farbstoff, wie er in Anspruch 13 definiert ist, wobei R₃ und R₄ aus H ausgewählt sind.

## Revendications

1. Composition de traitement du linge comprenant:
(i) de 2 à 70 % en poids d'un tensioactif, et
(ii) de 0,0001 à 0,1 % en poids d'un colorant thiazolium de formule suivante : 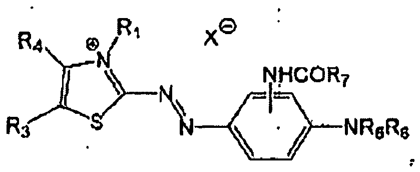 dans laquelle R₁ est un groupe alkyle en C₁-C₄ ramifié ou linéaire ;
R₃ et R₄ sont choisis indépendamment parmi H, CH₃ et C₂H₅ ou R₃ et R₄ sont liés pour former un cycle benzénique ;
R₅ et R₆ sont choisis indépendamment parmi : H, un groupe alkyle en C₁-C₄ ramifié ou linéaire, où la chaîne du groupe alkyle peut être substituée par des groupes OH, phényle, COR₇, CH₂Ph, (C₂H₄O)ₙH, où n vaut 2 à 5 ;
R₇ est un groupe alkyle en C₁-C₄ ramifié ou linéaire ; et
X est un anion négatif.

2. Composition de traitement du linge selon la revendication 1, dans laquelle R₁ est choisi parmi : CH₃ et C₂H₅.

3. Composition de traitement du linge selon la revendication 2, dans laquelle R₁ est CH₃.

4. Composition de traitement du linge selon l'une quelconque des revendications précédentes, dans laquelle R₃ et R₄ sont H.

5. Composition de traitement du linge selon l'une quelconque des revendications précédentes, dans laquelle R₅ et R₆ sont choisis indépendamment parmi : un groupe alkyle en C₁-C₄ ramifié ou linéaire, où la chaîne peut être substituée par des groupes OH et (C₂H₄O)ₙH, où n vaut 2 à 5.

6. Composition de traitement du linge selon l'une quelconque des revendications précédentes, dans laquelle R₅ et R₆ sont choisis indépendamment parmi : CH₃, C₂H₅ et (C₂H₄O)ₙH, où n vaut 2.

7. Composition de traitement du linge selon l'une quelconque des revendications précédentes, dans laquelle R₇ est choisi parmi : CH₃ et C₂H₅.

8. Composition de traitement du linge selon l'une quelconque des revendications précédentes, dans laquelle X est choisi parmi : les anions iodo, chloro, bromo, méthosulfate, tétrafluoroborate et acétate.

9. Composition de traitement du linge selon la revendication 1, dans laquelle X est choisi parmi : les anions iodo, chloro ou bromo.

10. Composition de traitement du linge selon la revendication 1, dans laquelle l'amide d'acide alkylique est en position ortho par rapport à la liaison azo dans le colorant thiazolium.

11. Composition de traitement du linge selon la revendication 1, dans laquelle le colorant thiazolium est choisi parmi : 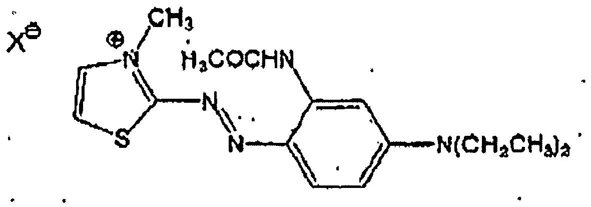 et

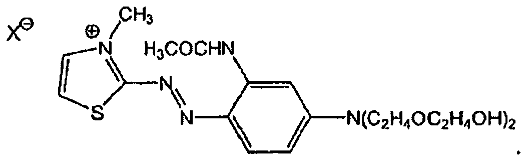

12. Procédé domestique de traitement d'un textile, le procédé comprenant les étapes de :
(1) traitement d'un textile avec une solution aqueuse d'un colorant thiazolium selon l'une quelconque des revendications 1 à 11, la solution aqueuse comprenant de 1 ppb à 1 ppm du colorant thiazolium et de 0 ppb à 1 ppm d'un autre colorant ou pigment choisi parmi ; les pigments, les colorants hydrophobes et les colorants directs ; et de 0,0 g/l à 3 g/l d'un tensioactif ; et
(2) rinçage et séchage du textile.

13. Colorant thiazolium tel que défini selon l'une quelconque des revendications 1 à 11, dans lequel R₃ et R₄ sont choisis parmi H, CH₃ et C₂H₅.

14. Colorant thiazolium tel que défini selon la revendication 13, dans lequel R₃ et R₄ sont choisis parmi H.
